# EUROPEAN PATENT APPLICATION

(11) **EP 2 666 709 A1**
(43) Date of publication of application: **27.11.2013**
(21) Application number: 12169548.0
(22) Date of filing: 25.05.2012
(51) Int. Cl.: B63B 19/00, B63B 19/02, B63B 49/00

(54) **A ship having a window as computer user interface**

(71) Applicant: ABB Research Ltd., 8050 Zürich (CH)
(72) Inventor: Azhar, Saad, 723 36 Västerås (SE); Johansson, Nils, 724 63 Västerås (SE); Vartiainen, Elina, 722 18 Västerås (SE)
(74) Representative: Savela, Reino Aleksi

(57) **Abstract**

The invention relates to a method of controlling a ship as well as to a ship, where the ship comprises at least one data collecting unit configured to collect operational data of the ship, at least one control computer for controlling an operation aspect of the ship, at least one window (14, 16, 18) facing a view used in the control and at least one actuating unit for actuating a control aspect of the ship, wherein the at least one window (14) comprises a touch screen on which operational data obtained from the data collecting unit is presented and via which a control command can be entered for controlling the ship.

## Description

### FIELD OF THE INVENTION

The present invention relates to a method of controlling a ship as well as to a ship.

### BACKGROUND

Ships have become larger and larger in size and more and more sophisticated with a lot of different computer systems for handling various functions.

The ships are furthermore often controlled via a bridge, from where the navigation takes place.

The bridge of the ship may be surrounded by windows for the crew of the ship to be able to visually observe the environment. The ship may furthermore have a main bridge and possibly two wing bridges on the sides of the main bridge in order to simplify manoeuvring of the ship in hard manoeuvred areas such as in a harbour. The ships of today are furthermore provided with control computers and user interface screens for visualizing information related to navigation, voyage and ship management systems. Such screens are typically located around the bridge so that they are visible when a crew member is seated or standing next to a pilot chair/station. When the crew member is at the main bridge, he or she can also look at meters above the windows to see different values related to velocity, pitch, etc.

This traditional way of presenting information has a number of inconveniences, of which the following are a few examples:
- The ship information provided by the computers may only be visible at pilot stations. Information may only be available at the main or wing bridge. If the bridge is occupied or a member of the crew needing the information is standing away from the bridge, it is difficult to get access to any information about the ship.
- When a captain is maneuvering the ship, he needs to be aware of the environment that is observed through the window as well as the information shown on the screen at the bridge. It is not always easy to combine and analyze this information in an effective way.
- The information screens at the bridge do not support collaborative use of information. If more people want to discuss around the information show on the screens, it is difficult for everyone to see the information without disturbing the member of the crew occupying the pilot stations.

Apart from the above described inconveniences, there is also a problem in the navigation of a ship.

A ship being forwarded through an area that is difficult to navigate may require the full attention of the person in charge of the navigation. However, the same person may also need to monitor control activities that he or she performs while navigating. It may thus be desirable to visually observe the activities performed by the hands. This is hard to do if attentiveness is required on the progress of the ship through the waters where navigation is performed.

There is thus also a need for enabling a person to view the route taken by a ship while at the same time performing other activities and above all to also see the other activities as they are being performed.

The present invention addresses one or more of the above motioned problems.

### SUMMARY OF THE INVENTION

The present invention addresses this situation. The invention is therefore directed towards solving the problem of providing an improvement in relation to navigation of ships.

This object is according to a first aspect of the invention solved through a method of controlling a ship, the ship comprising at least one control computer and at least one data collecting unit collecting data relating to the operation of the ship, the method comprising the steps of:
- Receiving, by the control computer, ship operational data from the data collecting unit,
- presenting the ship operating data on a window of the ship, which window faces a view used in the control,
- receiving a control command entered via the window, and
- controlling an operational aspect of the ship based on the control command.

This object is according to a second aspect of the invention solved through a ship comprising
- at least one data collecting unit configured to collect operational data of the ship,
- at least one control computer for controlling an operation aspect of the ship,
- at least one window facing a view used in the control, and
- at least one actuating unit for actuating a control aspect of the ship,
wherein the at least one window comprises a touch screen on which operational data obtained from the data collecting unit is presented and via which a control command can be entered for controlling the ship.

The present invention has a number of advantages. This invention takes advantage of the fact that a ship has windows to enable a visual contact with views used in the control, like the surrounding environment. A window is used as a screen onto which information can be visualized. The window can visualize real-time information related to, for example, the ship status or environment. The window can also be used for control. This means that it is possible to perform the control without taking the eyes away from the window. It is then possible to simultaneously watch the view used in the control and the activities being performed via the window.

### BRIEF DESCRIPTION OF THE DRAWINGS

The present invention will in the following be described with reference being made to the accompanying drawings, where
Fig. 1 schematically shows a ship having a bridge,
Fig. 2 schematically shows the bridge comprising a number of windows where at least one is a user interface,
Fig. 3 schematically a computerized control system controlling various operations of the ship,
Fig. 4 shows a flow chart of a number of method steps being performed in a method of controlling a ship according to a first embodiment of the invention, and
Fig. 5 shows a flow chart of a number of method steps being performed in a method of controlling a ship according to a second embodiment of the invention.

### DETAILED DESCRIPTION OF THE INVENTION

In the following, a detailed description of preferred embodiments of a ship and a method of controlling a ship will be given.

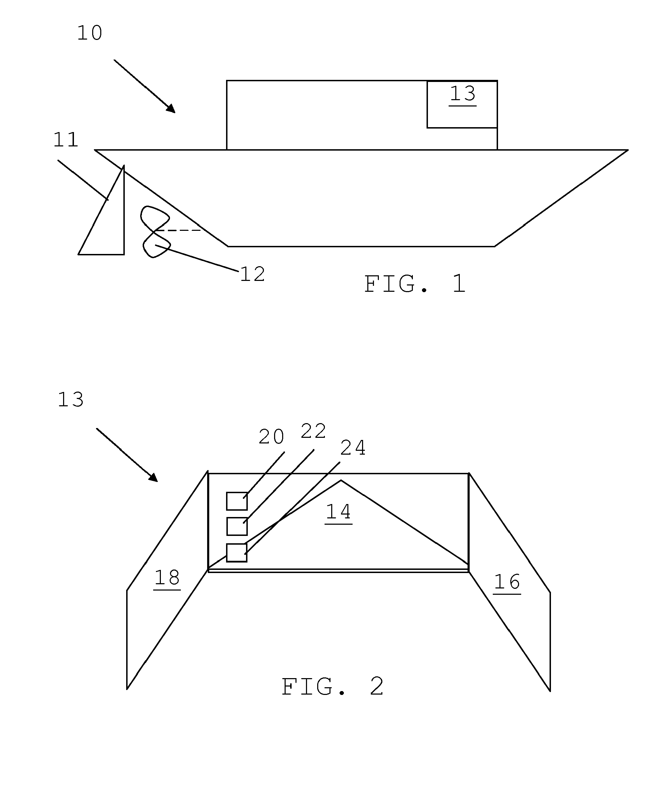

Fig. 1 schematically shows a ship 10. The ship shown in fig. 1 comprises a rudder 11 and a propeller 12. The propeller 12 is also connected to an engine (not shown) in order to propel the ship forward or backward. In order to control the propeller 12 and engine as well as the rudder 11, the ship 10 is also provided with a bridge 13, where various aspects of the ship 10 can be controlled. The rudder 11, propeller 12 and engine are all examples of entities used to steer the ship.

Fig. 2 schematically shows the bridge 13. The bridge comprises three windows 14, 16 and 18, a first front window 14 facing the bow, a second starboard side window 16 and a third port side window 18. The windows are thus placed on the bridge 13. At least one of the windows, here the first window 14 is a user interface and therefore a transparent screen on which symbols or icons 20, 22 and 24 are displayed. All the windows face a view used in the control, which in the case of the bridge is the waters through which the ship is to move.

The window 14 may be arranged through providing a touch-control interface cast onto a transparent glass. The window may be a window of the type Smart Window being provided by Samsung.

In the example of fig. 2, there is a first icon 20, a second icon 22 and a third icon 24. The screen 14 is furthermore a touch screen and thereby the icons can also be actuated by physically touching them. In this example only the first window 14 is a touch screen. It should here be realised that also the second and third windows 16 and 18 could be touch screens. It should furthermore be realized that there may be more or fewer windows on the bridge.

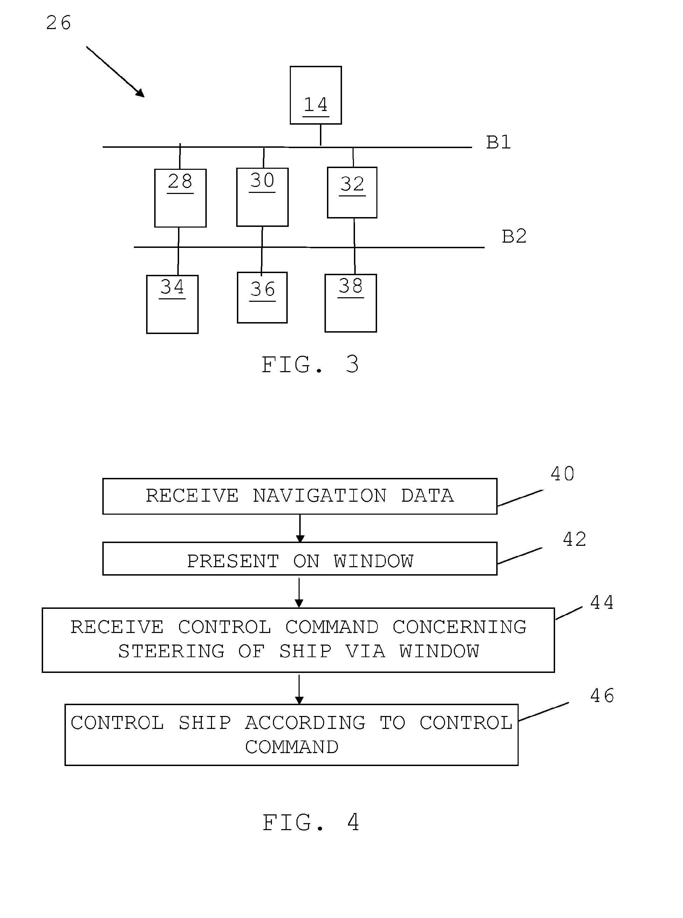

Fig. 3 shows a block schematic of a simplified control system 26 for controlling the ship. The control system 26 is a computerized control system.

In fig. 3 the control system includes a number of user interfaces. In this example only one is shown, namely the window 14. It should however be realized that there may be several user interfaces, such as provided by the second and third windows. There may also be other normal user interfaces such as workstations at various locations of the ship, like on the bridge or at other locations of the ship, such is in an engine room.

The user interface 14 is connected to a first data bus B1.

There is furthermore a second data bus B2 and between the first and second data busses B1 and B2 there are connected a number of control computers. There is here a first control computer 28, a second control computer 30 and a third control computer 32, controlling various aspects of the ship. The first control computer 34 may be involved with controlling navigation such as controlling steering using the rudder and controlling direction and speed through controlling the propeller. The second control computer 30 may be involved in ship management, such as controlling ventilation, and the third control computer 32 may be involved in controlling presentation of information on the bridge.

To the second data bus B2 there is furthermore connected a number of further devices 34, 36, and 38. A first of these further devices comprises a data collecting unit for collecting data relating to the operation of the ship. The data collecting unit is in this example in the form of a sensor 34. A second 36 of the further devices comprises an actuating unit or actuator 36 for actuating a control aspect of the ship and a third 38 of the further devices comprises a combined sensor and actuator, i.e. a combined data collecting and actuating unit for collecting data relating to the operation of the ship and for actuating a control aspect of the ship. The sensor 34 may here be a sensor sensing the angle of the rudder and the actuator 36 may be an actuator actuating the rudder, i.e. controlling the angle. The sensor may as an alternatively be a sensor sensing the speed and direction of rotation of the propeller and the actuator 36 may be an actuator actuating the engine. The combined actuator and sensor 38 may be a combined actuator and sensor controlling a ship management aspect, such as controlling the ventilation. It should be realized that these are mere examples of the further devices and that more further devices and other combinations may exist.

The bridge 13 of the ship is surrounded by the windows 14, 16 and 18 for the crew of the ship to be able to visually observe the environment of the ship. The bridge may comprise a main bridge and possibly two wing bridges on the port and starboard sides in order to enable support to be given to the captain or navigator as he or she manoeuvres the ship in a harbour.

Traditionally user interface screens for visualizing information related to navigation, voyage and ship management systems have been located around the bridge so that they are visible when a crew member is seated or standing next to a pilot chair/station. In this traditional setting there are furthermore meters above the windows. A crew member standing at the main bridge, can then also look at the meters to see different values related to velocity, pitch, etc.

There is a problem with this traditional solution in that a person involved in the navigation of the ship may need to continuously watch the environment, especially in the direction of the bow of the ship. This person may also need to both view and actuate elements of the control system, such as the engine and/or rudder, but also ventilation or to view other information about the ship such as how the ventilation is functioning. It is often difficult to combine analyzing of such data with the navigating of the ship.

It is furthermore possible that the person involved in the navigation needs to see the type of actuation that is being performed. It is thus possible that the navigator may need to see what he or she does with the hands.

This cannot be done in the traditional setting outlined above.

There may furthermore exist a number of further problems with the traditional setting.

Traditionally, ship information is only visible at pilot stations. Such information may thus only be available at the main or wing bridge. If the bridge is occupied or the navigator is standing away from the bridge, it is then difficult to get access to any information about the ship.

It is furthermore hard to provide a collaborative use of information in the above-mentioned traditional setting. If for instance more people than the navigator want to watch the information shown on the screens and discuss it, it is difficult for everyone to see the information without disturbing the navigator.

A method according to a first embodiment of the invention will now be described with reference being made to fig. 4. The method according to this first embodiment simplifies the activity of navigation.

The first control computer 28 receives ship operational data from a data collecting unit. In this first embodiment the ship operational data is navigation data received from the sensor 34, step 40, which may be data concerning the angle of the rudder 11. This data is then presented on the first window 14, for instance in the form of the first icon 20, step 42. Thereafter the first control computer 28 receives a control command from a person on the bridge, step 44. This control command is received via the first window 14, for instance through the user manipulating the first icon 20. The control command is thus entered into the first control computer 28 via the window 14. This control command is in this example a command concerning the steering of the ship. In case the first icon 20 is actuated, then the control command may be the change of the rudder position. After the first control computer 28 has received the control command, it then controls the ship 10 according to the command, step 46. The control command is in this case thus a command influencing the steering of the ship. The first control computer 28 thus controls an operational aspect of the ship based on the control command. In the example given above the operational aspect is related to the steering of the ship 10. The first control computer 28 therefore changes the rudder position through providing a control command to the actuator 36, which then moves the rudder. After the rudder has been moved, the new position is then shown via the first icon 20.

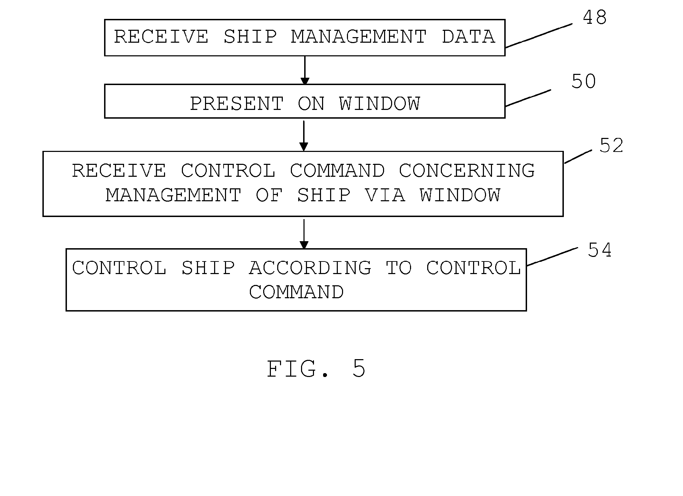

A method according to a second embodiment of the invention will now be described with reference being made to fig. 5. The method according to this second embodiment is concerned with general ship management.

The second control computer 30 receives ship operational data from a data collecting unit. In this second embodiment the ship operational data is ship management data received from the combined actuator and sensor 38, step 48, which may be data concerning the operation of the ventilation system of the ship 10. In this case the operational data thus comprises ship management data from an entity used to control a ship management aspect. This data may furthermore be presented through showing the temperature of a cargo area of the ship 10. This data is then presented on the first window 14, for instance in the form of the second icon 22, step 50. Thereafter the second control computer 30 receives a control command from a person on the bridge, step 52. This control command is received via the first window 14, for instance through the user manipulating the second icon 22. The control command is thus entered into the second control computer 30 via the window 14. This control command is in this example a command concerning the management of the ship 10. It is thus a command influencing the ship management. In case the second icon 22 is actuated, then the control command may be the change of temperature in the cargo area of the ship 10. After the second control computer 30 has received the control command, it then controls the ship according to the control command, step 54. It thus controls an operational aspect of the ship based on the control command. In the example given above the operational aspect is related to the management of the ship 10.

In the example given above it then changes the temperature of the cargo area through providing a control command to the combined sensor and actuator 40, which then adjusts the ventilation so that the new temperature is obtained. After the ventilation has been adjusted, the new temperature is then shown via the second icon 22.

In both the above described cases, the control is performed using the first window 14. This means that it is possible to perform the control without taking the eyes away from the first window 14. It is then possible to simultaneously watch the environment and the activities being performed. It is thus possible to watch a view used in the control, which in the case of the bridge is the waters through which the ship is to move.

This invention introduces a new interaction paradigm for ship bridges. It takes advantage of the fact that bridges are surrounded by windows to enable a visual contact with the surrounding environment. According to one aspect of the invention the window surface is used as a screen onto which information can be visualized. The window can visualize real-time information related to, for example, the ship status or environment.

Information about the ship management system or environment may be drawn on the first window, which is implemented, for example, as a transparent Liquid Crystal Display (LCD) touch screen. In this way the window is able to show information on its surface.

The window screen can be activated by, for example, touching the window or the screen can be on all the time. The icons 20, 22 and 24 on the screen can be visualized with transparency so that they do not occlude the environment. Furthermore, the screen can be interactive so that the user can interact with the user interface components such as the icons 20, 22 and 24.

It is furthermore possible that different windows have the same information visualized. As an alternative it is possible that they show different information. What information that is to be displayed on a window may furthermore be selected by the user.

The information windows can have a night and day mode. In the night mode, the brightness of the screen can be less powerful than in the day mode, for example.

Imaging the following scenario:
1. The ship is entering a harbour and the captain is manually manoeuvring the ship on the wing bridge.
2. As the captain manoeuvres the ship, he follows the position of the ship through the windows at the bridge. He uses his hands to control propellers of the ship.
3. As he looks out through the windows, the distances between the ship and the pier are visible in the surface of the window, as the window is used as a user interface screen to show additional information. In this way, the captain is able to see real-time information about the position of the ship while he is manoeuvring.
4. The captain knows that he is at the right position when the figures displayed on the window show right numbers and he can also see that the ship is in the right position.

The user interface components, i.e. the icons may furthermore be visualized semi-transparently so that they do not occlude the environmental data. The window can also show real-time information related to the environment that the captain is looking at. This information can be automatic and dynamic.

Several benefits can be listed for this invention:
As the crew members are able to see relevant information about the environment on the window screens, they are able to better map the information to the real environment and thus have improved situational awareness. As information can be shown on any window at the bridge, more people are able to see the same information that is currently visible only at the pilot chair. As several crew members can use the windows to access relevant information simultaneously, they do not need to disturb the captain or chief officer that could be manoeuvring the ship and should not be disturbed.

The windows comprising a touch screen were above all described in relation to a bridge. It should however be realized that such windows may be provided at other locations. They may for instance be utilized in passenger areas through e.g. visualizing weather and tourist information. Also the cargo room, safety room and engine control room can utilize such windows facing a view used in the control, like the engines etc.

## Claims

1. A method of controlling a ship (10), the ship comprising at least one control computer (28, 30, 32) and at least one data collecting unit (34, 38) collecting data relating to the operation of the ship, the method comprising the steps of:
- receiving (40; 48), by the control computer (28; 30), ship operational data from the data collecting unit (34; 38),
- presenting (42; 50) the ship operating data on a window (14) of the ship, which window is faces a view used in the control,
- receiving (44; 52) a control command entered via the window, and
- controlling (46; 54) an operational aspect of the ship based on the control command.

2. The method according to claim 1, wherein the window is placed on a bridge.

3. The method according to claim 1 or 2, wherein the window faces the bow of the ship.

4. The method according to any previous claim, wherein the operational data comprises navigation data from an entity (11) used to steer the ship and the control command is a command influencing the steering of the ship.

5. The method according to any previous claim, wherein the operational data comprises ship management data from an entity used to control a ship management aspect and the control command is a command influencing the ship management.

6. A ship (10) comprising:
- at least one data collecting unit (34, 38) configured to collect operational data of the ship,
- at least one control computer (28, 30, 32) for controlling an operation aspect of the ship,
- at least one window (14, 16, 18) facing a view used in the control, and
- at least one actuating unit (36, 38) for actuating a control aspect of the ship,
- wherein said at least one window (14) comprises a touch screen on which operational data obtained from the data collecting unit is presented and via which a control command can be entered for controlling the ship.

7. The ship according to claim 6, further comprising a bridge (13), where at least one window (14, 16, 18) is placed on the bridge.

8. The ship according to claim 6 or 7, wherein the window faces the bow of the ship.

9. The ship according to any of claims 6 - 8, wherein the operational data comprises navigation data from an entity (11) used to steer the ship and the control command is a command influencing the steering of the ship.

10. The ship according to any of claims 6 - 9, wherein the operational data comprises ship management data from an entity used to control a ship management aspect and the control command is a command influencing the ship management.

11. The ship according to any of claims 6 - 10, wherein the window has a night and a day mode, where the screen is less bright in the night mode than in the day mode.

12. The ship according to any of claims 6 - 11, wherein the window comprises semi-transparent symbols (20, 22, 24).
